Europäisches Patentamt

European Patent Office

Office européen des brevets

(11) **EP 1 341 000 A2**

(19)

(12) **EUROPÄISCHE PATENTANMELDUNG**

(43) Veröffentlichungstag:
**03.09.2003  Patentblatt 2003/36**

(51) Int Cl.⁷: **G01S 7/40**

(21) Anmeldenummer: **03002787.4**

(22) Anmeldetag: **07.02.2003**

(84) Benannte Vertragsstaaten:
**AT BE BG CH CY CZ DE DK EE ES FI FR GB GR
HU IE IT LI LU MC NL PT SE SI SK TR**
Benannte Erstreckungsstaaten:
**AL LT LV MK RO**

(30) Priorität: **01.03.2002  DE 10209291**

(71) Anmelder: **Thales Communications GmbH
75175 Pforzheim (DE)**

(72) Erfinder:
 • **Ludewig, Jürgen
  70806 Kornwestheim (DE)**
 • **Mertens, Wolfgang
  69181 Leimen (DE)**

(74) Vertreter: **KOHLER SCHMID + PARTNER
Patentanwälte GbR,
Ruppmannstrasse 27
70565 Stuttgart (DE)**

(54) **Vorrichtung zur Erzeugung einer Laufzeitverzögerung eines gepulsten Radarsignals und Verfahren zu dessen Betrieb**

(57)   Eine Vorrichtung zur Erzeugung einer gewünschten Laufzeitverzögerung eines gepulsten Radarsignals, ist dadurch gekennzeichnet,
dass eine Verzögerungsleitung (13) mit einem Signaleingang und einem Signalausgang für das gepulste Radarsignal vorgesehen ist, deren Durchlaufen eine Zeitverzögerung τ des gepulsten Radarsignals bewirkt, dass der Verzögerungsleitung ein Signalverstärker (14) nachgeschaltet ist, der die Amplitude des gepulsten Radarsignals um einen bestimmten Verstärkungsfaktor f anhebt, und dass eine Auskoppelvorrichtung (12) vorgesehen ist, die es ermöglicht, zumindest einen Teil der Amplitude des aus dem Signalausgang des Signalverstärkers herauskommenden gepulsten Radarsignals wiederum dem Signaleingang der Verzögerungsleitung zuzuführen, und die es ermöglicht, nach n-fachem Durchlaufen des gepulsten Radarsignals durch die Verzögerungsleitung zumindest einen Teil der Amplitude des gepulsten Radarsignals auszukoppeln, wobei gilt T=n·τ, und wobei n eine natürliche Zahl ist. Diese Vorrichtung ist auch für breitbandige Radarsignale geeignet, und kann prinzipiell nach oben unbegrenzte Laufstrecken des gepulsten Radarsignals simulieren.

Figur 1

**Beschreibung**

Die Erfindung betrifft eine Vorrichtung zur Erzeugung einer gewünschten Laufzeitverzögerung T zwischen einem an der Vorrichtung eingehenden und einem zugehörigen, an einem Ausgang der Vorrichtung anstehenden, gepulsten Radarsignal, insbesondere im Mikrowellenbereich, die einer bestimmten Laufstrecke S des gepulsten Radarsignals entspricht.

Ein solche Vorrichtung ist beispielsweise aus der Firmenschrift "TE 12283 Abnahme-Testprotokoll" von Alcatel/SEL vom 16.02.93 bekannt.

In der Luft- und Seefahrt, aber auch in der militärischen Verteidigungstechnik werden Radarsysteme zur Detektion von bewegten und unbewegten Objekten in der Umgebung des Radarsystems eingesetzt. Die Radartechnik beruht darauf, elektromagnetische Strahlung typischerweise im Mikrowellenbereich (ca. 10 GHz) auszusenden und die vom Objekt reflektierte Strahlung wiederum aufzufangen.

Bei gepulsten Systemen kann aus der Laufzeit der Strahlung, d.h. aus der Zeitdifferenz zwischen dem Aussenden des gepulsten Radarsignals und der Detektion des reflektierten gepulsten Radarsignals, auf die Entfernung des Objekts vom Radarsystem geschlossen werden, wobei sich das Radarsignal mit Lichtgeschwindigkeit (welche vom Ausbreitungsmedium abhängt) ausbreitet. Aus einer etwaigen Frequenzverschiebung zwischen ausgesandter und reflektierter Strahlung kann auf die Bewegung (Geschwindigkeit) des Objekts geschlossen werden.

Um neu gebaute oder entwickelte Radarsysteme zu erproben, kann man prinzipiell einen Praxiseinsatz simulieren. Dazu wird das Radarsystem komplett, insbesondere mit Radarsignalquelle, Sende- und Empfangseinheit sowie einer Radarsignal-Auswerteeinrichtung aufgebaut und betrieben, wobei reale Objekte in den zu untersuchenden Entfernungen von der Sende- und Empfangseinheit platziert werden müssen. Dies ist sehr arbeits-, zeitund kostenintensiv und bei größeren Entfernungen meist nicht realisierbar, da eine entsprechende Sichtverbindung zum Ziel vorhanden sein müsste.

Zu Testzwecken kann das Ziel durch eine Ersatzvorrichtung ersetzt werden, die das von der Radarsignalquelle ausgehende gepulste Radarsignal entgegennimmt, speichert, und nach einer gewünschten Zeit T an die Radarsignal-Auswerteeinrichtung weitergibt. Die Zeit T simuliert dabei die Laufzeit des Radarimpulses von der Sende- und Empfangseinrichtung zum detektiertem Objekt sowie den zugehörigen Rückweg zur Sende- und Empfangseinrichtung. Die Zeit T wird daher als Laufzeitverzögerung des Radarsignals bezeichnet.

Eine solche Ersatzvorrichtung erlaubt also die Erprobung eines Radarsystems im Labor, ohne dass Radarsignale tatsächlich in die Umgebung abgestrahlt werden müssen. Neben Experimenten während der Entwicklung eines neuen Radarsystems kann damit auch ein - verglichen mit einem vollen Praxiseinsatz - kostenarmer Nachweis der Funktionstüchtigkeit eines Radarsystems erbracht werden. Ein solcher Nachweis wird in der Regel von seitens des Käufers eines Radarsystems von dessen Hersteller gefordert.

In Radarsystemen älterer Bauart besteht ein einzelnes Radarsignal aus einem Mikrowellenimpuls mit einheitlicher Frequenz während der gesamten Impulsdauer (Sendedauer). Solche Radarsysteme werden als "schmalbandig" bezeichnet.

Ersatzvorrichtungen für schmalbandige Radarsysteme sind bereits bekannt geworden, beispielsweise aus der Firmenschrift von Alcatel/SEL, aaO. Diese basieren auf der Speicherung des Radarsignals in einem Mikrowellenresonator hoher Güte, der in der zitierten Firmenschrift als Hohlraum-Resonator ausgeführt ist. Nach Ablauf der gewünschten Zeit T wird der im Resonator gespeicherte Radarimpuls (bzw. die zugehörige Energie) auf die Radarsignal-Auswerteeinrichtung umgeleitet. Um zu verhindern, dass während der Zeit T der Radarimpuls signifikant an Energie verliert, muss die Resonanzkurve des Resonators sehr scharf sein. Dann aber ist der Resonator nur zur Speicherung von Radarimpulsen eines sehr begrenzten Frequenzintervalls, d.h. effektiv nur von Radarimpulsen einer einzigen Frequenz, geeignet. Nur wenn der Resonator bzw. dessen Resonanzfrequenz auf den Radarimpuls bzw. dessen Frequenz abgestimmt ist, kann bei schmalbandigen Radarsystemen eine Ersatzvorrichtung auf Basis eines Mikrowellenresonators hoher Güte eingesetzt werden.

Moderne Radarsysteme verwenden jedoch einerseits spektral gespreizte (=breitbandige) gepulste Radarsignale, d.h. die Frequenz und/oder Phase eines einzelnen Radarsignals ist über die Zeitdauer des Impulses veränderlich. Andererseits lässt sich die Mittenfrequenz des Sendeimpulses umschalten. Solche Radarsysteme werden auch als "frequenzagil" bezeichnet. Frequenzagile Radarsysteme besitzen gegenüber schmalbandigen Radarsystemen einige entscheidende Vorteile.

Bei schmalbandigen Radarsystemen ist die kleinste auflösbare Entfernungseinheit proportional zur Impulsdauer eines einzelnen Sendeimpulses. Zur Erhöhung der Reichweite wird bei modernen Radarsystemen das Sendesignal sowohl im Frequenzbereich als auch im Zeitbereich expandiert, um mit geringer Impuls-Spitzenleistung eine möglichst große Entfernung zu überbrücken. In der Radarsignalverarbeitung wird der Empfangsimpuls wieder komprimiert und somit die gewünschte Entfernungsauflösung realisiert. Im Ergebnis können frequenzagile Radarsysteme bei gleicher Entfernungsauflösung und gleicher Reichweite mit viel geringerer Impuls-Spitzenleistung, d.h. kleinerer Amplitude des gesendeten Radarsignals, auskommen als schmalbandige Radarsysteme.

Ein weiterer Vorteil der frequenzagilen Radarsysteme besteht in der geringeren Störanfälligkeit verglichen mit schmalbandigen Radarsystemen. Schmalbandige Radarsysteme können durch einen Störsender, der lediglich bei einer einzigen Sendefrequenz abstrahlt, wirkungsvoll durch Überlastung der Empfangseinheit geblendet werden. Frequenzagile Radarsysteme senden und empfangen hingegen auf einem breiten Spektrum von Frequenzen, so dass eine effektive Störung sehr viel schwieriger ist, und insbesondere eine weitaus größere Leistung und ein breiteres Sendespektrum des Störsenders erfordert.

Bei einem modernen, frequenzagilen, das Impulskompressionsverfahren nutzenden Radarsystem kann eine Resonator-basierte Ersatzvorrichtung nicht eingesetzt werden, da diese ein breitbandiges Radarsignal nicht speichern kann.

Aufgabe der vorliegenden Erfindung ist es demgegenüber, eine Vorrichtung zur Erzeugung einer gewünschten Laufzeitverzögerung T zwischen einem an der Vorrichtung eingehenden und einem zugehörigen, an einem Ausgang der Vorrichtung anstehenden, gepulsten Radarsignal, insbesondere im Mikrowellenbereich, die einer bestimmten Laufstrecke S des gepulsten Radarsignals entspricht, vorzustellen, die auch für breitbandige Radarsignale geeignet ist, und wobei prinzipiell nach oben unbegrenzte Laufstrecken S des gepulsten Radarsignals simuliert werden können.

Erfindungsgemäß wird diese Aufgabe auf überraschend einfache, aber wirkungsvolle Art und Weise dadurch gelöst, dass

- eine Verzögerungsleitung mit einem Signaleingang und einem Signalausgang für das gepulste Radarsignal vorgesehen ist, deren Durchlaufen eine Zeitverzögerung τ des gepulsten Radarsignals zwischen dessen Eingang am Signaleingang der Verzögerungsleitung und dessen Herauskommen am Signalausgang der Verzögerungsleitung bewirkt,

- dass dem Signalausgang der Verzögerungsleitung ein Signalverstärker mit einem Signaleingang und einem Signalausgang für das gepulste Radarsignal nachgeschaltet ist, der die Amplitude des am Signaleingang des Signalverstärkers eingehenden gepulsten Radarsignals um einen bestimmten Verstärkungsfaktor f anhebt, und

- dass eine Auskoppelvorrichtung vorgesehen ist, die es ermöglicht, zumindest einen Teil der Amplitude des aus dem Signalausgang des Signalverstärkers herauskommenden gepulsten Radarsignals wiederum dem Signaleingang der Verzögerungsleitung zuzuführen, und die es ermöglicht, nach n-fachem Durchlaufen des gepulsten Radarsignals durch die Verzögerungsleitung und den Signalverstärker zumindest einen Teil der Amplitude des gepulsten Radarsignals auf den Ausgang der Vorrichtung auszukoppeln, wobei gilt T = n · τ , und wobei n eine natürliche Zahl ist.

Anders als bei der Resonator-basierten Ersatzvorrichtung wird bei der erfindungsgemäßen Vorrichtung das gepulste Radarsignal hauptsächlich durch die Ausbreitung eines Impulses in einer Verzögerungsleitung verzögert. Die Ausbreitung des Impulses ist aber unabhängig von dessen Frequenzspektrum. Der Impuls in der Verzögerungsleitung trägt dabei alle Informationen des gepulsten Radarsignals, muss aber selbst kein Radarsignal sein.

Die erfindungsgemäße Ausgestaltung der Vorrichtung erlaubt es, dass die Verzögerungsleitung nach der erforderlichen Verstärkung des gepulsten Radarsignals mehrfach hintereinander genutzt wird, so dass auch längere Laufstrecken S, insbesondere taktische Entfernungen der Größenordnung um 100 km, durch die erfindungsgemäße Vorrichtung simuliert werden können. Soll die Verzögerungsleitung mehrfach genutzt werden, müssen die Vorrichtung und das gepulste Radarsignal so aufeinander abgestimmt sein, dass sich das gepulste Radarsignal innerhalb der Vorrichtung nicht selbst überlagert, also die "Front" des gepulsten Radarsignals nicht den Signaleingang der Verzögerungsleitung zum zweiten Mal erreicht, bevor das "Ende" des Impulses diesen Signaleingang das erste Mal passiert hat. Die mehrfache Nutzung der Verzögerungsleitung ist immer dann unkritisch, wenn die Dauer des gepulsten Radarsignals D kürzer ist als die Zeitverzögerung τ der Verzögerungsleitung. Eine entsprechende Einstellung von D und τ mit D < τ ist in der Praxis in der Regel leicht möglich und stellt somit nur eine unwesentliche Begrenzung der Anwendbarkeit der erfindungsgemäßen Vorrichtung dar.

Bei einer besonders bevorzugte Ausführungsform der erfindungsgemäßen Vorrichtung ist n größer oder gleich 2. In diesem Fall kommen die Vorteile der Vorrichtung besonders gut zur Geltung. Die Erzeugung großer Laufzeitverzögerungen T kann zwar prinzipiell dadurch erfolgen, dass die Verzögerungsleitung entsprechend lang gewählt wird. Innerhalb der Verzögerungsleitung wird aber der die Informationen des gepulsten Radarsignals tragende Impuls abgeschwächt. Eine Verstärkung sollte erfolgen, solange der Impuls noch deutlich vom Rauschen unterschieden werden kann, was die maximal mögliche Länge einer Verzögerungsleitung effektiv begrenzt. Die mehrfache Nutzung der gleichen Verzögerungsleitung ist außerdem platz- und materialsparend, wodurch die Produktions- bzw. Anschaffungskosten der Vorrichtung niedrig gehalten werden können. Außerdem ist es bei mehrfacher Benutzung der Verzögerungsleitung einfach, verschiedene Laufzeitverzögerungen T mit nur einem Gerät zu erzeugen. Durch die Wahl der Anzahl der Durchläufe n kann die Laufzeitverzögerung T in Schritten von τ eingestellt werden.

Eine weitere vorteilhafte Ausführungsform sieht vor, dass die Auskoppelvorrichtung eine Schalteinrichtung umfasst, die das aus dem Signalausgang des Signalverstärkers herauskommende gepulste Radarsignal entweder dem Signaleingang der Verzögerungsleitung zuführt oder auf den Ausgang der Vorrichtung auskoppelt. Diese Ausführungsform ist besonders einfach zu realisieren und dient der Simulation eines singulären Objekts in der Entfernung S/2 zum Radarsystem. Für eine etwaige, abermalige Einspeisung des gepulsten Radarsignals in die Verzögerungsleitung steht die gesamte Amplitude des gepulsten Radarsignals zur Verfügung, so dass ein besonders gutes Signal- zu Rausch-Verhältnis (signal to noise ratio, S/N) erreicht wird.

In den Rahmen der vorliegenden Erfindung fällt auch ein Verfahren zum Betrieb dieser Ausführungsform, das dadurch gekennzeichnet ist, dass die Schalteinrichtung zum Zeitpunkt des Eingehens des gepulsten Radarsignals an der Vorrichtung so geschaltet ist, dass das gepulste Radarsignal dem Signaleingang der Verzögerungsleitung zugeführt wird und nach der gewünschten Laufzeitverzögerung T das gepulste Radarsignal auf den Ausgang der Vorrichtung geschaltet wird.

Bei einer alternativen Ausführungsform der erfindungsgemäßen Vorrichtung umfasst die Auskoppelvorrichtung einen Richtkoppler, der einen Teil der Amplitude des aus dem Signalausgang des Signalverstärkers herauskommenden gepulsten Radarsignals dem Signaleingang der Verzögerungsleitung zuführt, und einen anderen Teil, insbesondere den restlichen Teil, der Amplitude des gepulsten Radarsignals auskoppelt. Dadurch wird bei jedem Umlauf des gepulsten Radarsignals durch die Vorrichtung ein Puls erzeugt.

Eine Weiterbildung dieser Ausführungsform sieht vor, dass der Richtkoppler mit einem Zeitschalter versehen ist, der nach einer vorgegebenen Zeit t den ausgekoppelten, anderen Teil der Amplitude des gepulsten Radarsignals dem Ausgang der Vorrichtung zuführt. Dadurch kann die Vorrichtung zur Simulation eines singulären Objekts verwendet werden.

Zur Erfindung gehört auch ein Verfahren zum Betrieb dieser Weiterbildung der erfindungsgemäßen Vorrichtung, das dadurch gekennzeichnet ist, dass vor dem Zuführen eines neuen, in die Vorrichtung eingehenden gepulsten Radarsignals der Verstärkungsfaktor f des Signalverstärkers soweit abgesenkt wird, dass die Amplitude eines eventuell durch die Verzögerungsleitung und den Signalverstärker laufenden gepulsten Radarsignals vor dem Eintreffen des neuen, eingehenden gepulsten Radarsignals auf das Rauschniveau abgesenkt wird. Auf diese weise wird verhindert, dass verschiedene gepulste Radarsignale sich unerwünscht überlagern und dadurch die Funktion der Vorrichtung beeinträchtigen.

Bei einer alternativen Weiterbildung führt der Richtkoppler den ausgekoppelten, anderen Teil der Amplitude des gepulsten Radarsignals direkt dem Ausgang der Vorrichtung zu. Dadurch wird eine Verzögerungspulsserie erzeugt, die einer Serie von äquidistanten Objekten entspricht. Es treten damit n Ziele in n äquidistanten Entfernungszellen auf.

Eine andere bevorzugte Ausführungsform der erfindungsgemäßen Vorrichtung ist so ausgestaltet, dass die Verzögerungsleitung eine Mikrowellenleitung umfasst. Eine Mikrowellenleitung kann das gepulste Radarsignal direkt und unmittelbar aufnehmen. Sie ist besonders für kurze Zeitverzögerungen $\tau$ geeignet. Denkbar ist auch, einen Teilabschnitt der Verzögerungsleitung als Mikrowellenleitung auszugestalten, um so die Zeitverzögerung $\tau$ der gesamten Verzögerungsleitung fein abzustimmen.

Ganz besonders bevorzugt ist eine Ausführungsform, die dadurch gekennzeichnet ist, dass die Verzögerungsleitung einen optischen Leiter, vorzugsweise einen Glasfaserleiter, umfasst, und dass am Anfang und am Ende des optischen Leiters jeweils ein Signalwandler vorgesehen ist, der das eingehende gepulste Radarsignal in ein optisches Signal bzw. das optische Signal in ein ausgehendes Radarsignal umwandelt. Das gepulste Radarsignal wird also einer optische Welle, typischerweise einem Laserstrahl, aufmoduliert. Dieser modulierte Laserstrahl durchläuft dann den optischen Leiter und wird anschließend demoduliert, woraufhin das gepulste Radarsignal wieder zur Verfügung steht. Glasfaserleiter sind leicht verfügbar und relativ billig. Außerdem verfügen sie über einen relativ geringen Absorptionskoeffizienten, so dass auch nach relativ großen Längen der Verzögerungsleitung, etwa um 10 km, noch ausreichende S/N-Verhältnisse gegeben sind.

Eine andere Ausführungsform sieht vor, dass die Verzögerungsleitung einen akustischen Leiter umfasst, und dass am Anfang und am Ende des akustischen Leiters jeweils ein Signalwandler vorgesehen ist, der das eingehende gepulste Radarsignal in ein akustisches Signal bzw. das akustische Signal in ein ausgehendes Radarsignal umwandelt. Als akustische Leiter können viele Festkörpermaterialien dienen, die leicht zu beschaffen und unkritisch in der Handhabung sind.

In den Rahmen der vorliegenden Erfindung fällt auch ein Gerät zur Erzeugung einer gewünschten Laufzeitverzögerung $T_s$ zwischen einem an dem Gerät eingehenden und einem zugehörigen, an einem Ausgang des Geräts anstehenden, gepulsten Radarsignals, insbesondere im Mikrowellenbereich, die einer bestimmten Laufstrecke $S_s$ des gepulsten Radarsignals entspricht, dadurch gekennzeichnet, dass m Vorrichtungen der oben beschriebenen erfindungsgemäßen Art in Serie geschaltet sind, wobei

$$T_S = \sum_{i=1}^{m} T_i$$

gilt und wobei $T_i$ der Laufzeitverzögerung T der i-ten Vorrichtung entspricht und m eine natürliche Zahl ist. Das Gerät gestattet vorteilhafter weise die Erzeugung eines quasi-kontinuierlichen Entfernungsspektrum von zu simulierenden Objekten.

Die Erfindung umfasst weiterhin ein Gerät zur Erzeugung einer gewünschten Laufzeitverzögerung $T_P$ zwischen einem an dem Gerät eingehenden und einem zugehörigen, an einem Ausgang des Geräts anstehenden, gepulsten Radarsignals, insbesondere im Mikrowellenbereich, die einer bestimmten Laufstrecke $S_P$ des gepulsten Radarsignals entspricht, dadurch gekennzeichnet, dass das Gerät mehrere Vorrichtungen der oben beschriebenen erfindungsgemäßen Art umfasst, und dass eine Wähleinrichtung vorgesehen ist, die das am Gerät eingehende gepulste Radarsignal einer der Vorrichtungen, die durch die Wähleinrichtung bestimmt ist, zuführt, und dass der Ausgang der durch die Wähleinrichtung bestimmten Vorrichtung auf den Ausgang des Geräts geschaltet ist, wobei $T_P$ der Laufzeitverzögerung T der durch die Wähleinrichtung bestimmten Vorrichtung entspricht. Dadurch kann schnell aus mehreren verschiedenen Laufzeitverzögerungen ausgewählt werden.

In den Rahmen der vorliegenden Erfindung fällt auch ein Verfahren zum Betrieb einer oben erläuterten erfindungsgemäßen Vorrichtung, wobei der Verstärkungsfaktor f des Signalverstärkers so eingestellt wird, dass die Amplitude des am Ausgang der Vorrichtung anstehenden gepulsten Radarsignals ungefähr gleich ist der Amplitude des zugehörigen, unmittelbar zuvor in die Vorrichtung eingegangenen gepulsten Radarsignals. Dieses Verfahren stellt sicher, dass der Signalverstärker der Vorrichtung die Dämpfung des gepulsten Radarsignals nicht überkompensiert (=die Vorrichtung zu schwingen beginnt).

Ein weiteres erfindungsgemäßes Verfahren zum Betrieb einer oben erläuterten erfindungsgemäßen Vorrichtung ist dadurch gekennzeichnet, dass der Verstärkungsfaktor f des Signalverstärkers so eingestellt wird, dass die Amplitude des am Signalausgang des Signalverstärkers herauskommenden gepulsten Radarsignals kleiner oder gleich der Amplitude des unmittelbar zuvor am Signaleingang der Verzögerungsleitung eingelaufenen gepulsten Radarsignals ist. Auch dies stellt sicher, dass der Signalverstärker der Vorrichtung die Dämpfung des gepulsten Radarsignals nicht überkompensiert (=die Vorrichtung zu schwingen beginnt). Dadurch werden die Komponenten der erfindungsgemäßen Vorrichtung sowie die Empfangseinrichtung des Radarsystems vor Überlastung geschützt.

Schließlich gehört zur Erfindung noch ein Verfahren zum Betrieb einer oben erläuterten erfindungsgemäßen Vorrichtung, wobei das in die Vorrichtung eingehende gepulste Radarsignal breitbandig und/oder codiert ist. In diesem Fall kommen die Vorteile der Erfindung, insbesondere die Möglichkeit, nichtmonofrequente Radarsignale einer Laufzeitverzögerung T zu unterziehen, voll zur Geltung.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:

Fig. 1: den schematischen Aufbau einer erfindungsgemäßen Vorrichtung zur Erzeugung einer Laufzeitverzögerung eines gepulsten Radarsignals;

Fig. 2a: die erfindungsgemäße Vorrichtung von Fig. 1 mit zwei Schalteinrichtungen in der Auskoppelvorrichtung;

Fig. 2b: die erfindungsgemäße Vorrichtung von Fig. 1 mit einem Richtkoppler in der Auskoppelvorrichtung;

Fig. 2c: die erfindungsgemäße Vorrichtung von Fig. 1 mit einem Richtkoppler in der Auskoppelvorrichtung und mit einem Zeitschalter;

Fig. 3: den schematischen Aufbau der zur erfindungsgemäßen Vorrichtung von Fig. 1 gehörenden Verzögerungsleitung, die als optischer Leiter ausgestaltet ist;

Fig. 4a: den schematischen Aufbau eines erfindungsgemäßen Geräts, in dem drei erfindungsgemäße Vorrichtungen von Fig. 1 parallel verschaltet sind;

Fig. 4b: den schematischen Aufbau eines erfindungsgemäßen Geräts, in dem zwei erfindungsgemäße Vorrichtungen von Fig. 1 in Serie geschaltet sind;

Fig. 5: den schematischen Aufbau eines in der Praxis erprobten, erfindungsgemäßen Geräts ("Echobox") zur Erzeugung einer Laufzeitdifferenz eines gepulsten Radarsignals.

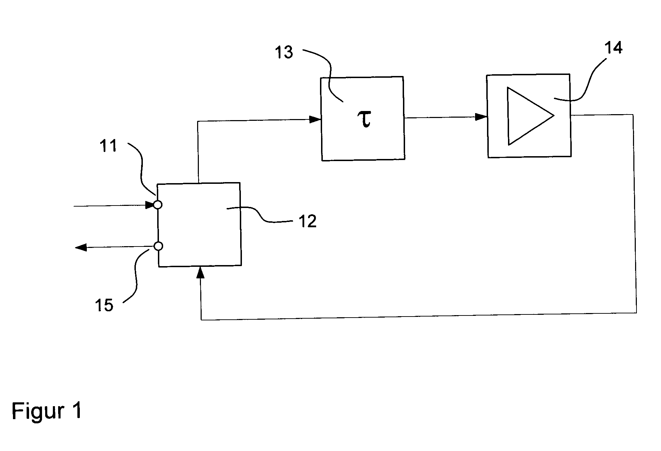

Figur 1 zeigt den schematischen Aufbau einer erfindungsgemäßen Vorrichtung zur Erzeugung einer Laufzeitverzögerung T eines gepulsten Radarsignals. Ein an einem Eingang 11 der Vorrichtung, welcher zur Auskoppelvorrichtung 12 der Vorrichtung gehört, eingehendes gepulstes Radarsignal, dargestellt durch einen (von links kommenden) Pfeil, wird an den Signaleingang der Verzögerungsleitung 13 weitergegeben. Zwischen dem Eintreffen des gepulsten Radarsignals am Signaleingang der Verzögerungsleitung 13 und dem Herauskommen des gepulsten Radarsignals am Signalausgang der Verzögerungsleitung 13 vergeht die Zeitverzögerung τ. Das nunmehr deutlich abgeschwächte gepulste Radarsignal wird an den Eingang des Signalverstärkers 14 weitergeleitet, wo dessen Amplitude um den Verstärkungsfaktor f angehoben wird, d.h. f>1. Das solcher Art verstärkte gepulste Radarsignal wird nunmehr zur Auskoppelvorrichtung 12 geleitet. Sofern die gewünschte Laufzeitverzögerung T des gepulsten Radarsignals noch nicht erreicht ist, wird die Amplitude das gepulsten Radarsignals zumindest teilweise erneut dem Signaleingang der Verzögerungsleitung 13 zugeführt und wie oben beschrieben weitergeleitet und verarbeitet, bis es wiederum der Auskoppelvorrichtung 12 zugeführt wird. Sobald die gewünschte Laufzeitverzögerung T erreicht ist, was näherungsweise nach n=T/τ Umläufen der Fall ist, wobei n nur als natürliche Zahl und somit T nur als Vielfaches von τ gewählt werden kann, wird zumindest ein Teil der Amplitude des gepulsten Radarsignals auf den Ausgang 15 der Vorrichtung ausgekoppelt. Die erwähnte Näherung besteht in der Vernachlässigung von Laufzeiten des gepulsten Radarsignals innerhalb der Vorrichtung, aber außerhalb der Verzögerungsleitung.

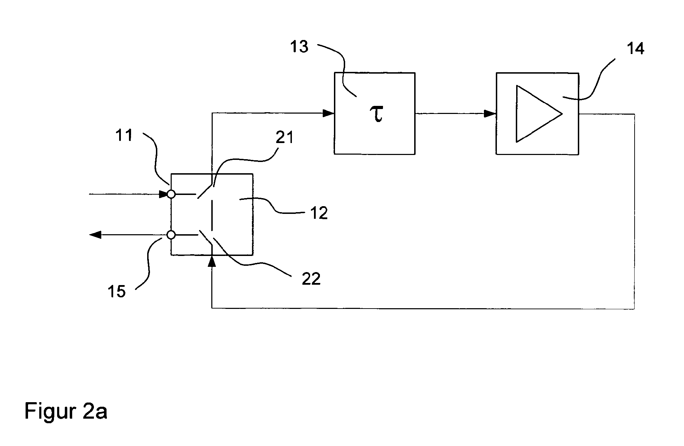

In Figur 2a ist eine mögliche Ausgestaltung der Auskoppelvorrichtung 12 näher erläutert. Um ein gepulstes Radarsignal vom Eingang 11 der Vorrichtung auf den Signaleingang der Verzögerungsleitung 13 weiterzuleiten, befindet sich eine obere Schalteinrichtung 21 der Auskoppelvorrichtung 12 in der linken Position. Das nach einem Umlauf durch die Vorrichtung an der Auskoppelvorrichtung ankommende gepulste Radarsignal wird durch eine untere Schaltvorrichtung 22 entweder in der rechten Schaltposition für einen weiteren Umlauf auf die obere Schalteinrichtung 21 weitergeleitet, die ihrerseits zur Weiterleitung des gepulsten Radarsignals an den Signaleingang der Verzögerungsleitung 13 in die rechte Position geschaltet sein muss, oder aber die untere Schaltvorrichtung 22 gibt das an der Auskoppelvorrichtung 12 ankommende gepulste Radarsignal in der linken Schalterposition an den Ausgang 15 der Vorrichtung weiter. In beiden Fällen wird also jeweils die volle Amplitude des gepulsten Radarsignals an einen Zielort weitergeleitet. Um eine bestimmte Zeitverzögerung T einzustellen, muss die untere Schaltvorrichtung 22 nach dem Verlassen des "Endes" des gepulsten Radarsignals bei seinem (n-1)-ten Umlauf, aber vor dem Eintreffen der "Front" des gepulsten Radarsignals bei dessen letztem, n-tem Umlauf an der unteren Schaltvorrichtung 22 von der rechten in die linke Position umgeschaltet werden.

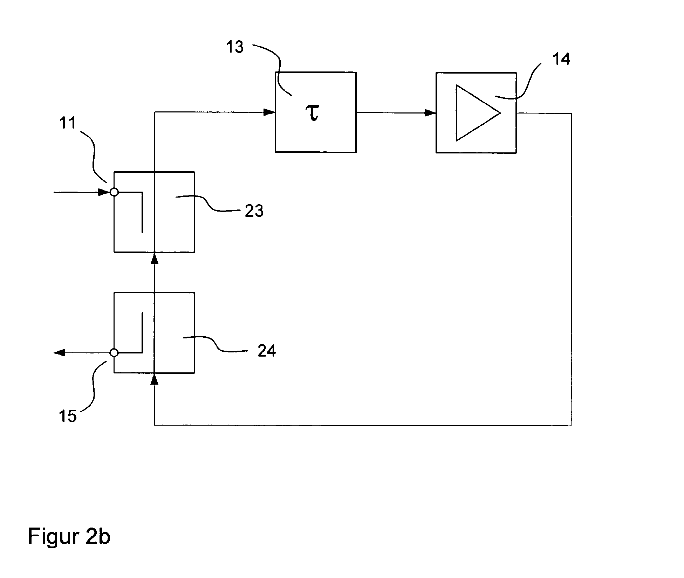

Figur 2b zeigt eine alternative Ausgestaltung der Auskoppelvorrichtung 12. Diese ist zweiteilig mit einer Einkoppelvorrichtung 23 und einen Richtkoppler 24 ausgeführt. Ein am Richtkoppler 24 ankommendes gepulstes Radarsignal wird stets mit einem Teil seiner Amplitude für einen weiteren Durchlauf an die Einkoppelvorrichtung 23 und damit mittelbar an den Signaleingang der Verzögerungsleitung 13 weitergegeben, mit einem anderen Teil seiner Amplitude aber an den Ausgang 15 der Vorrichtung ausgekoppelt. Somit entsteht bei jedem Durchlauf des gepulsten Radarsignals ein gepulstes Radarsignal am Ausgang 15 der Vorrichtung. Dadurch kann eine Serie von Objekten auf einem Radarschirm simuliert werden, wobei sich die Objekte in regelmäßig zunehmendem Abstand zum Radarsystem befinden, wobei der Abstand zweier benachbarter Objekte dem Laufweg der Radarstrahlung entspricht, den diese innerhalb von einem Umlauf, also näherungsweise innerhalb der Zeit τ, zurücklegt.

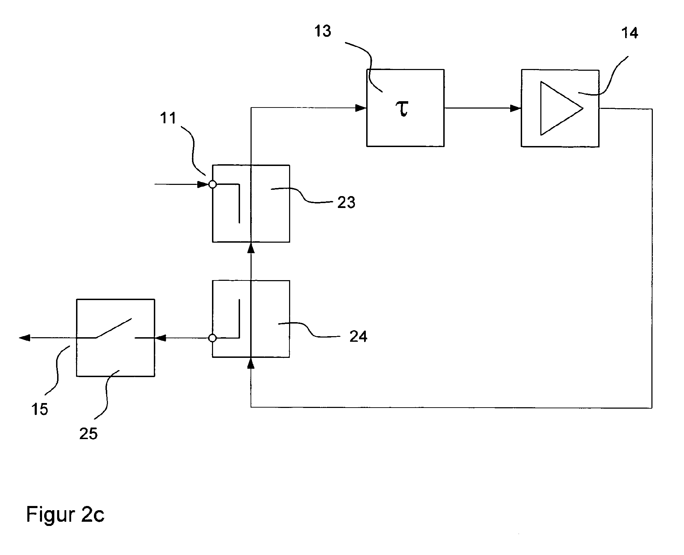

Figur 2c zeigt eine Weiterbildung der in Figur 2b gezeigten Ausgestaltung der Auskoppelvorrichtung 12. Der vom Richtkoppler 24 ausgekoppelte Amplitudenanteil des gepulsten Radarsignals wird auf einen Zeitschalter 25 geleitet. Wenn der erste oder auch noch weitere ausgekoppelte Radarsignale nicht an den Ausgang 15 der Vorrichtung weitergegeben werden sollen, so werden diese durch den geöffneten Zeitschalter 25 dem Ausgang 15 der Vorrichtung entzogen. Erst nach Ablauf einer bestimmten Zeit, nämlich der gewünschten Laufzeitverzögerung T, wird der Zeitschalter 25 geschlossen und ausgekoppelte Signale können den Ausgang 15 der Vorrichtung erreichen. Um ein einmal laufendes gepulstes Radarsignal wieder aus der Vorrichtung zu entfernen, wird der Verstärkungsfaktor f des Signalverstärkers 14 so weit abgesenkt, dass die Amplitude des gepulsten Radarsignals durch Dissipation schließlich der Rauschamplitude in der Vorrichtung entspricht.

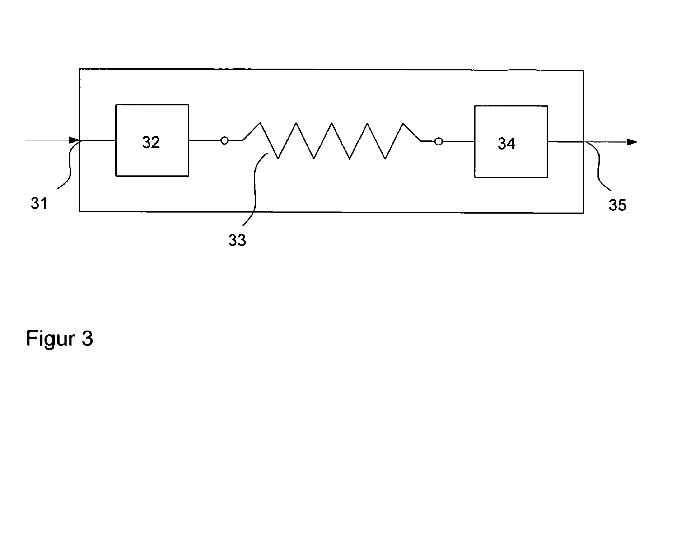

In Figur 3 wird eine Ausgestaltung der Verzögerungsleitung 13 der erfindungsgemäßen Vorrichtung von Figur 1 schematisch dargestellt. Das gepulste Radarsignal, das an einem Signaleingang 31 der Verzögerungsleitung 13 anliegt, wird zunächst zum Modulator 32 weitergeleitet. Dieser Signalwandler moduliert die Informationen des gepulsten Radarsignals einer optischen Welle auf. Diese optische Welle ist ein monochromatischer Laserstrahl, der ebenfalls im Modulator 32 erzeugt wird. Die modulierte optische Welle wird einem optischen Leiter, der als Glasfaserleiter 33 ausgestaltet ist, zugeführt. Der Glasfaserleiter 33 besitzt eine Länge $l$ und einen Brechungsindex b. Um den Glasfaserleiter 33 zu durchlaufen, benötigt die optische Welle die Zeit τ. Die Länge des optischen Leiters $l$ multipliziert mit dessen Brechungsindex b entspricht näherungsweise der pro Durchlauf simulierten Laufstrecke s des gepulsten Radarsignals an der Erdoberfläche, wo näherungsweise ein Brechungsindex von 1 angenommen werden kann. Es gilt $\tau = (b \cdot l) / c = s / c$, wobei c die Vakuum-Lichtgeschwindigkeit ist. Die Länge des optischen Leiters l ist dabei als die zu simulierende Laufstrecke S oder vorteilhafter weise als ganzzahliger Teiler von S gewählt. Außerdem ist l so groß gewählt, dass τ größer oder gleich der Dauer des gepulsten Radarsignals D ist, um eine Überlagerung des gepulsten Radarsignals mit sich selbst zu vermeiden. Besonders bevorzugt sind Längen des optischen Leiters $l$ zwischen 1 und 10 km. Nach Durchlaufen des Glasfaserleiters 33 wird die optische Welle im zweiten Signalwandler, dem Demodulator 34, in ein Mikrowellensignal gewandelt und das gepulste Radarsignal wieder erstellt und an den Signalausgang 35 der Verzögerungsleitung 13 weitergeleitet.

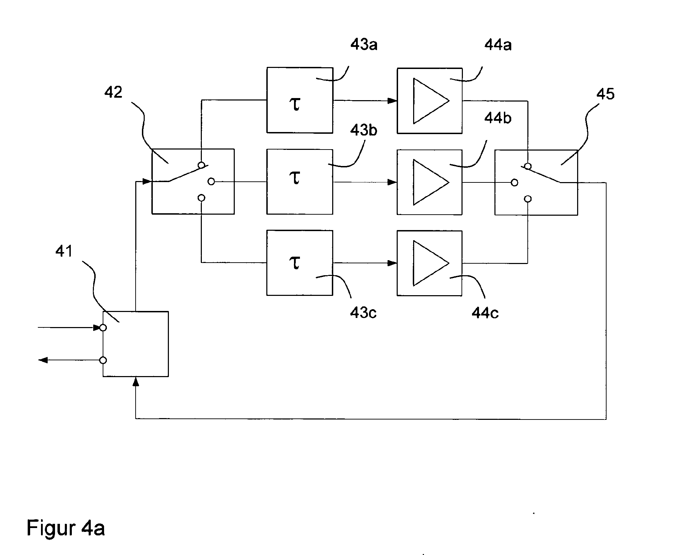

Figur 4a zeigt ein erfindungsgemäßes Gerät, in dem drei erfindungsgemäße Vorrichtungen analog Fig. 1 parallel verschaltet sind. Ein an einer Ein- und Auskoppelvorrichtung 41 des Geräts ankommendes gepulstes Radarsignal wird auf einen Eingangverteiler 42 einer zweiteilige Wähleinrichtung geleitet und entsprechend der Schalterstellung an einen von drei Strängen a, b oder c von Verzögerungsleitungen 43 und Signalverstärkern 44 weitergegeben. Die Verzögerungsleitungen 43 der verschiedenen Stränge a, b ,c besitzen dabei unterschiedliche Zeitverzögerungen τ. Am Kollektor 45, der den zweiten Teil der Wähleinrichtung darstellt und dessen Schalter die gleiche Position wie der des Eingangsverteilers 42 einnimmt, wird das gepulste Radarsignal zur Ein- und Auskoppelvorrichtung 41 des Geräts weitergeleitet. Die Signalleitung vom Kollektor 45 zur Ein- und Auskoppelvorrichtung 41 des Geräts wird also von allen drei Strängen a, b und c gemeinsam genutzt. Durch die Wähleinrichtung kann schnell zwischen verschiedenen Zeitverzögerungen τ pro Umlauf gewechselt werden, ohne die Verzögerungsleitung 13 der Vorrichtung von Figur 1 austauschen zu müssen. Durch geeignete Ausgestaltung der Wähleinrichtung, die einen Wechsel des Stranges zulässt, während ein Signal sich in einer der Verzögerungsleitungen befindet, wird funktionell eine Verschaltung der einzelnen Stränge a, b und c in Serie erreicht. Bei einer solchen Ausgestaltung muss der Schalter des Kollektors 45 auf der Position des bisherigen Stranges, der Schalter des Eingangsverteilers 42 aber zur gleichen Zeit auf die Position des neu anzuwählenden Stranges einstellbar sein.

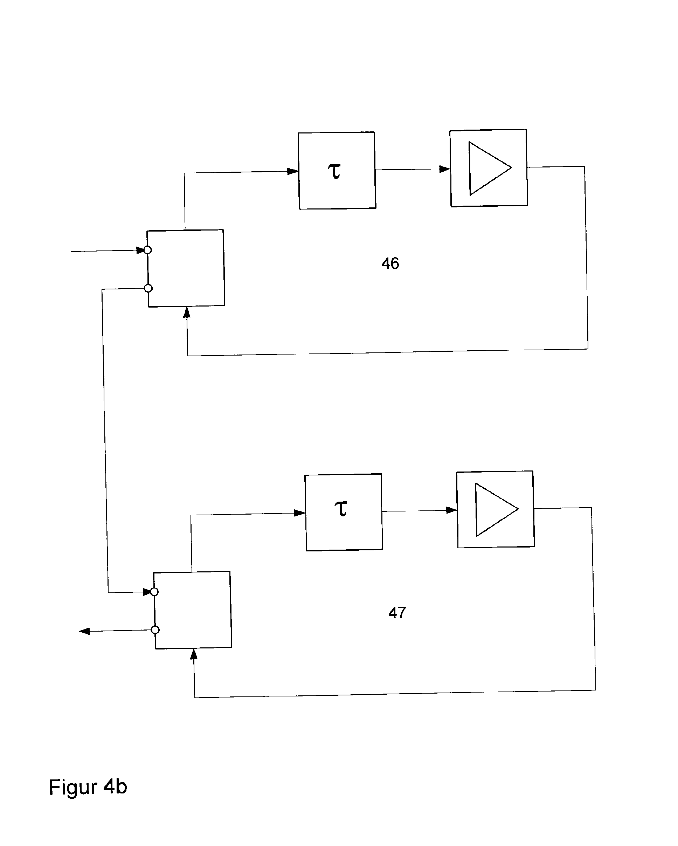

In Figur 4b ist schematisch ein erfindungsgemäßes Gerät dargestellt, das zwei erfindungsgemäße Vorrichtungen gemäß Fig. 1 enthält, wobei diese in Serie verschaltet sind. Ein gepulstes Radarsignal wird zunächst dem Eingang der oberen Vorrichtung 46 zugeführt, der gleichzeitig den Eingang des Geräts darstellt. Nach Ablauf der Zeit $T_1$ erreicht das gepulste Radarsignal den Ausgang der oberen Vorrichtung 46 und wird dem Eingang der unteren Vorrichtung 47 zugeführt. Nach Ablauf der Zeit $T_2$ liegt das gepulste Radarsignal am Ausgang der unteren Vorrichtung 47 an, der gleichzeitig den Ausgang des Geräts darstellt. Die gesamte Laufzeitverzögerung $T_s$ ergibt sich aus $T_s = T_1 + T_2$. Dadurch können Laufzeitverzögerungen eingestellt werden, die mit einer einzelnen Vorrichtung nicht zugänglich wären. Bei entsprechender Ausgestaltung eines Geräts mit in Serie verschalteten erfindungsgemäßen Vorrichtungen gemäß Fig. 1 kann ein quasi kontinuierliches Spektrum von einstellbaren Laufzeitverzögerungen erreicht werden.

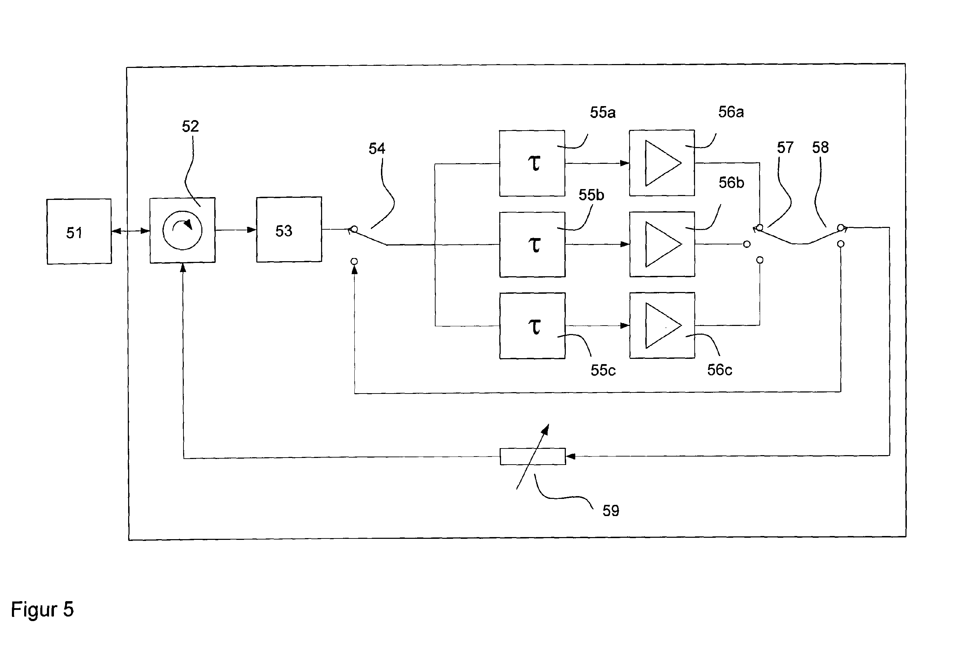

Figur 5 zeigt die schematische Ausgestaltung einer Echobox, die die Anmelderin auf Grundlage der vorliegenden Erfindung konstruiert hat und erfolgreich zur Lösung der erfindungsgemäßen Aufgabe in der Praxis eingesetzt wurde.

Ein Radarsystem, BORA 550 bzw. dessen Komponenten Radarsignalquelle und Radarsignal-Auswerteeinrichtung, Bezugzeichennummer 51, wird mit Hilfe der Echobox getestet. Dazu wird das von dem Radarsystem 51 ausgehende gepulste Radarsignal in die Echobox auf einen Zirkulator 52 geleitet. Der Zirkulator 52 leitet ein an einem seiner Anschlüsse anstehendes Signal dem in Pfeilrichtung (hier: im Uhrzeigersinn) nächsten Anschluss zu. In diesem Fall gibt der Zirkulator 52 das gepulste Radarsignal an einen Phasenschieber 53 weiter, der die Mittenfrequenz des Radarsignals so verschiebt, dass dies zur Simulation der Dopplerverschiebung eines bewegten Objekts dient, unterzieht und an den Schalter 54 weitergibt. Zu diesem Zeitpunkt befindet sich der Schalter 54 in der oberen Position, so dass das gepulste Radarsignal auf die drei parallele Stränge a,b und c von Verzögerungsleitungen 55 und Signalverstärkern 56 weitergeleitet wird. Durch den Schalter 57 wird ein Strang, im abgebildeten Fall der oberste Strang a, ausgewählt und dessen Signal zum Schalter 58 weitergeleitet. Dieser Schalter 58 koppelt entweder das gepulste Radarsignal aus (abgebildete obere Schalterstellung), oder aber führt es dem Schalter 54 zu (untere Stellung des Schalters 58). Im letzteren Fall leitet der Schalter 54, nunmehr in seiner unteren Position, das gepulste Radarsignal erneut den drei parallelen Strängen a, b, und c von Verzögerungsleitungen 55 und Signalverstärkern 56 zu. Wird das gepulste Radarsignal am Schalter 58 aber ausgekoppelt, so gelangt es zum steuerbaren Dämpfungsglied 59, das zur definierten Dämpfung (Abschwächung) des gepulsten Radarsignals dient. Die definierte Dämpfung gestattet beispielsweise die Messung der Empfindlichkeit des getesteten Radarsystems 51. Die Verbindung zwischen Schalter 58 und Zirkulator 52 wird daher auch als variable Eichleitung bezeichnet. Das vom steuerbaren Dämpfungsglied 59 ausgehende gepulste Radarsignal wird zum Zirkulator 52 weitergegeben. Dieser gibt es schließlich an das Radarsystem 51 zurück. Zu diesem Zeitpunkt liegt das gepulste Radarsignal dann versehen mit einer Laufzeitverzögerung $T_{ges}$ und einer Dopplerverschiebung ausgestattet mit einer definierten Dämpfung vor.

**Patentansprüche**

1. Vorrichtung zur Erzeugung einer gewünschten Laufzeitverzögerung T zwischen einem an der Vorrichtung eingehenden und einem zugehörigen, an einem Ausgang (15) der Vorrichtung anstehenden, gepulsten Radarsignal, insbesondere im Mikrowellenbereich, die einer bestimmten Laufstrecke S des gepulsten Radarsignals entspricht, **dadurch gekennzeichnet**,

   a) dass eine Verzögerungsleitung (13) mit einem Signaleingang und einem Signalausgang für das gepulste Radarsignal vorgesehen ist, deren Durchlaufen eine Zeitverzögerung τ des gepulsten Radarsignals zwischen dessen Eingang am Signaleingang der Verzögerungsleitung (13) und dessen Herauskommen am Signalausgang der Verzögerungsleitung (13) bewirkt,

b) dass dem Signalausgang der Verzögerungsleitung (13) ein Signalverstärker (14) mit einem Signaleingang und einem Signalausgang für das gepulste Radarsignal nachgeschaltet ist, der die Amplitude des am Signaleingang des Signalverstärkers (14) eingehenden gepulsten Radarsignals um einen bestimmten Verstärkungsfaktor f anhebt, und

c) dass eine Auskoppelvorrichtung (12) vorgesehen ist, die es ermöglicht, zumindest einen Teil der Amplitude des aus dem Signalausgang des Signalverstärkers (14) herauskommenden gepulsten Radarsignals wiederum dem Signaleingang der Verzögerungsleitung (13) zuzuführen, und die es ermöglicht, nach n-fachem Durchlaufen des gepulsten Radarsignals durch die Verzögerungsleitung (13) und den Signalverstärker (14) zumindest einen Teil der Amplitude des gepulsten Radarsignals auf den Ausgang (15) der Vorrichtung auszukoppeln, wobei gilt $T = n \cdot \tau$, und wobei n eine natürliche Zahl ist.

2. Vorrichtung nach Anspruch 1, **dadurch gekennzeichnet, dass** n größer oder gleich 2 ist.

3. Vorrichtung nach einem der vorherigen Ansprüche, **dadurch gekennzeichnet, dass** die Auskoppelvorrichtung (12) eine Schalteinrichtung (22) umfasst, die das aus dem Signalausgang des Signalverstärkers (14) herauskommende gepulste Radarsignal entweder dem Signaleingang der Verzögerungsleitung (13) zuführt oder auf den Ausgang (15) der Vorrichtung auskoppelt.

4. Vorrichtung nach einem der Ansprüche 1 oder 2, **dadurch gekennzeichnet, dass** die Auskoppelvorrichtung (12) einen Richtkoppler (24) umfasst, der einen Teil der Amplitude des aus dem Signalausgang des Signalverstärkers (14) herauskommenden gepulsten Radarsignals dem Signaleingang der Verzögerungsleitung (13) zuführt, und einen anderen Teil, insbesondere den restlichen Teil, der Amplitude des gepulsten Radarsignals auskoppelt.

5. Vorrichtung nach Anspruch 4, **dadurch gekennzeichnet, dass** der Richtkoppler (24) mit einem Zeitschalter (25) versehen ist, der nach einer vorgegebenen Zeit t den ausgekoppelten, anderen Teil der Amplitude des gepulsten Radarsignals dem Ausgang (15) der Vorrichtung zuführt.

6. Vorrichtung nach Anspruch 4, **dadurch gekennzeichnet, dass** der Richtkoppler (24) den ausgekoppelten, anderen Teil der Amplitude des gepulsten Radarsignals direkt dem Ausgang (15) der Vorrichtung zuführt.

7. Vorrichtung nach einem der vorherigen Ansprüche, **dadurch gekennzeichnet, dass** die Verzögerungsleitung (13) eine Mikrowellenleitung umfasst.

8. Vorrichtung nach einem der vorherigen Ansprüche, **dadurch gekennzeichnet, dass** die Verzögerungsleitung (13) einen optischen Leiter, vorzugsweise einen Glasfaserleiter (33), umfasst, und dass am Anfang und am Ende des optischen Leiters jeweils ein Signalwandler (32, 34) vorgesehen ist, der das eingehende gepulste Radarsignal in ein optisches Signal bzw. das optische Signal in ein ausgehendes Radarsignal umwandelt.

9. Vorrichtung nach einem der vorherigen Ansprüche, **dadurch gekennzeichnet, dass** die Verzögerungsleitung (13) einen akustischen Leiter umfasst, und dass am Anfang und am Ende des akustischen Leiters jeweils ein Signalwandler vorgesehen ist, der das eingehende gepulste Radarsignal in ein akustisches Signal bzw. das akustische Signal in ein ausgehendes Radarsignal umwandelt.

10. Gerät zur Erzeugung einer gewünschten Laufzeitverzögerung $T_s$ zwischen einem an dem Gerät eingehenden und einem zugehörigen, an einem Ausgang des Geräts anstehenden, gepulsten Radarsignals, insbesondere im Mikrowellenbereich, die einer bestimmten Laufstrecke $S_s$ des gepulsten Radarsignals entspricht, **dadurch gekennzeichnet, dass** m Vorrichtungen (46, 47) nach den Ansprüchen 1 bis 9 in Serie geschaltet sind, wobei

$$T_S = \sum_{i=1}^{m} T_i$$

gilt und wobei $T_i$ der Laufzeitverzögerung T der i-ten Vorrichtung (46, 47) entspricht und m eine natürliche Zahl ist.

11. Gerät zur Erzeugung einer gewünschten Laufzeitverzögerung $T_P$ zwischen einem an dem Gerät eingehenden und einem zugehörigen, an einem Ausgang des Geräts anstehenden, gepulsten Radarsignals, insbesondere im Mikrowellenbereich, die einer bestimmten Laufstrecke Sp des gepulsten Radarsignals entspricht, **dadurch gekennzeichnet, dass** das Gerät mehrere Vorrichtungen nach den Ansprüchen 1 bis 9 umfasst, und dass eine Wähleinrichtung vorgesehen ist, die das am Gerät eingehende gepulste Radarsignal einer der Vorrichtungen, die durch die Wähleinrichtung bestimmt ist, zuführt, und dass der Ausgang der durch die Wähleinrichtung bestimmten Vorrichtung auf den Ausgang des Geräts geschaltet ist, wobei $T_P$ der Laufzeitverzögerung T der durch die Wähleinrichtung bestimmten Vorrichtung entspricht.

12. Verfahren zum Betrieb einer Vorrichtung nach Anspruch 3, **dadurch gekennzeichnet, dass** die Schalteinrichtung (22) zum Zeitpunkt des Eingehens des gepulsten Radarsignals an der Vorrichtung so geschaltet ist, dass das gepulste Radarsignal dem Signaleingang der Verzögerungsleitung (13) zugeführt wird und nach der gewünschten Laufzeitverzögerung T das gepulste Radarsignal auf den Ausgang (15) der Vorrichtung geschaltet wird.

13. Verfahren zum Betrieb einer Vorrichtung nach Anspruch 5, **dadurch gekennzeichnet, dass** vor dem Zuführen eines neuen, in die Vorrichtung eingehenden gepulsten Radarsignals der Verstärkungsfaktor f des Signalverstärkers (14) soweit abgesenkt wird, dass die Amplitude eines eventuell durch die Verzögerungsleitung (13) und den Signalverstärker (14) laufenden gepulsten Radarsignals vor dem Eintreffen des neuen, eingehenden gepulsten Radarsignals auf das Rauschniveau abgesenkt wird.

14. Verfahren zum Betrieb einer Vorrichtung nach einem der Ansprüche 1 bis 9, **dadurch gekennzeichnet, dass** der Verstärkungsfaktor f des Signalverstärkers (14) so eingestellt wird, dass die Amplitude des am Ausgang (15) der Vorrichtung anstehenden gepulsten Radarsignals ungefähr gleich ist der Amplitude des zugehörigen, unmittelbar zuvor in die Vorrichtung eingegangenen gepulsten Radarsignals.

15. Verfahren zum Betrieb einer Vorrichtung nach einem der Ansprüche 1 bis 9, **dadurch gekennzeichnet, dass** der Verstärkungsfaktor f des Signalverstärkers (14) so eingestellt wird, dass die Amplitude des am Signalausgang des Signalverstärkers (14) herauskommenden gepulsten Radarsignals kleiner oder gleich der Amplitude des unmittelbar zuvor am Signaleingang der Verzögerungsleitung (13) eingelaufenen gepulsten Radarsignals ist.

16. Verfahren zum Betrieb einer Vorrichtung nach einem der Ansprüche 1 bis 9, **dadurch gekennzeichnet, dass** das in die Vorrichtung eingehende gepulste Radarsignal breitbandig und/oder codiert ist.

Figur 1

Figur 2a

Figur 2b

Figur 2c

Figur 3

Figur 4a

Figur 4b

Figur 5